# EUROPEAN PATENT APPLICATION

(11) **EP 3 868 825 A1**
(43) Date of publication of application: **25.08.2021**
(21) Application number: 20158352.3
(22) Date of filing: 19.02.2020
(51) Int. Cl.: C08L 23/12

(54) **RECYCLED POLYOLEFIN COMPONENT FOR HOUSEHOLD APPLIANCES**

(71) Applicant: ELECTROLUX APPLIANCES AKTIEBOLAG, 105 45 Stockholm (SE)
(72) Inventor: CELOTTO, Monica, 33080 Porcia (IT); SANITA', Massimo, 33080 Porcia (IT)
(74) Representative: Electrolux Group Patents

(57) **Abstract**

The present invention relates to a component for household appliances made of a plastic mixture comprising recycled polyolefin composition deriving from post-consumer plastic materials and/or post- industrial plastic materials and at least one filler. It further relates to an household appliance including the component and a method for manufacturing the household appliance by using the component.

## Description

The present invention relates to a recycled polyolefin component for household appliances. In particular, the present invention relates to a recycled polyolefin component for washing machines, washer driers, driers, dishwasher and food preservation household appliances.

Since long time in household appliance sector, several types of plastics have been introduced to replace metal components. One of the most important plastic materials is polypropylene. The reason to that success is that polypropylene shows remarkable mechanical characteristics covering a wide range of temperatures.

Another valuable feature is the inertness to the most common chemical compounds. This allows the use of polypropylene in applications where the environment can be aggressive.

Moreover, the mechanical performances of this material can be enhanced by the addition of several type of fillers and reinforcements, such as mineral (e.g. calcium carbonate, talc), glass and cellulosic fibers.

The polyolefine so formulated can be used for structural and non structural applications.

Although the long design practice, the most challenging application is still the washing machine tub shell due to cyclic mechanical loads. In fact, it is common for structural application to combine polypropylene with glass fibers to get a reinforcement or talc to get the wanted stiffness and strength.

However, this kind of plastic can be considerably expensive. There is thus a continuous search for enhanced raw materials able to provide reliable mechanical properties without affecting the final cost of the household appliance.

Furthermore, in the last decades, the awareness of the public opinion towards environmental issues has increased; for example, the problem of the impact caused by wastes once the life cycle of a good or a product has finished is strongly felt.

All those initiatives aimed at recovering materials coming from the recycling are therefore more and more appreciated.

However, plastics from ended goods have first low intrinsic value and are generally inherently non-compatible.

Some industries of the recycling sector have made an effort to overcome all those limitation designing recycling processes able to distinguish and separate the different plastics. Therefore, some industries have proposed recycled plastics products with sufficiently well defined characteristics that could be used in low-end applications such as pipes, rigid and flexible packaging, gadgets and so on.

A distinguished case is polyethylene terephtalate (PET) from water bottle for which has been developed a specific recovery chain getting so high value to compete with its virgin resin.

The key factor of this framework are the public policies for plastic disposal facilitating the plastics collection and management. This has allowed the recycling industry to develop systems to separate the plastics in some main categories and making a market for recycled plastics.

The recycled plastics, excluded PET bottle and PVC (polyvinyl cloride) and any other with its own specific recovery process, can be defined by their source of disposal system, that is: post-consumer by packaging (food packaging, packaging), post-consumer by waste electrical and electronic equipments (WEEE) and post-consumer by automotive.

However, the main difficulty to use these type of plastics for high performance application is their nature of non completely standardized resins.

Aim of the present invention is therefore to provide plastic household appliance components that show high performances, that are cheap and eco-friendly.

In compliance with the above aims, according to the present invention there is provided a component for household appliances made of a plastic mixture comprising a recycled polyolefin composition deriving from post-consumer plastic materials and at least one filler according to claim 1.

For the purpose of the present invention, by the term "post-consumer plastic materials" there are meant the selected materials deriving from the separate collection of wastes, especially municipal solid wastes, preferably from packaging.

Another possible definition indicates that the "post-consumer plastic material" are those materials which the consumer has stopped using and which may be solid, thrown away, or discharded as waste (The global Development Research Centre. Solid waste management. Glossary, http://glossary.eea.europa.eu), such as waste electrical and electronic equipments (WEEE) and waste from automotive industries.

In particular, the component for household appliances of the invention is made of a plastic mixture and comprises a recycled polyolefin composition deriving from post-consumer plastic materials and at least one filler, wherein the recycled polyolefin composition contains at least one of:
7-1000 ppm of lead,
5-100 ppm of cadmium,
0.01-1000 ppm of mercury,
10-1000 ppm of chromium,
5-400 ppm of bromine.

According to a preferred embodiment, the recycled polyolefin composition contains at least one of:
7-90 ppm of lead,
5-40 ppm of cadmium,
0.01-10 ppm of mercury,
10-100 ppm of chromium,
5-100 ppm of bromine.

According to a further preferred embodiment, the recycled polyolefin composition contains at least one of:
7-60 ppm of lead,
5-20 ppm of cadmium,
0.01-0.5 ppm of mercury,
10-20 ppm of chromium,
5-60 ppm of bromine.

The use of a recycled polyolefin composition with the above-mentioned contaminants in limited amounts allows the manufacture of household appliance components that are cheap and eco-friendly assuring at the same time high mechanical performances and limiting the risk of incompliances related to chemical requirements.

Preferably, though not necessarily, the component is made of a plastic mixture comprising 10-60% recycled polyolefin and 0.1-60% filler, the percentage being by weight of the total plastic mixture.

Preferably, though not necessarily, the component is furthermore characterized in that the recycled polyolefin composition comprises recycled polypropylene (PP).

As regards polypropylene PP, it may be a polypropylene homopolymer, block-copolymer or random copolymer.

For the purposes of the present invention, by the term polypropylene homopolymer it is meant a polymer having a high isotactic degree containing only propylene monomeric units joined head-to-tail, while by the term polypropylene copolymer it is meant a polymer as stated above, containing even small amounts (preferably less than 10%) of ethylene.

The recycled polyolefin composition may preferably comprise:
- 60-90% polypropylene;
- 0-20% polyethylene;
- 0-10% styrenic resin selected from the group consisting of polystyrene, high-impact polystyrene, acrylonitrile butadiene styrene and mixtures thereof;
- 0-10% other polymers selected from the group consisting of polyethylene terephtalate, polyacrylate, polybutylene terephthalate, polyoxymethylene, poly(p-phenylene oxide) and mixtures thereof,
   the percentages being by weight of the total recycled polyolefin.

Instead, by the term polyethylene (homopolymer) it is meant a linear polymer only of ethylene monomeric units, therefore highly crystalline.

For the purposes of the present invention, the polyethylene may be a low density polyethylene (LDPE), i.e., with short and long branches, or it may be linear low density polyethylene (LLDPE), with short branches, i.e., an ethylene copolymer with C3-C8 alpha-olefins (i.e., a ethylene copolymer with mono-substituted olefins: propylene, 1-butene, 1-hexene, 1-octene, etc.) or ethylene propylene rubber or mixtures thereof.

The plastic mixture may further preferably comprise 0-50% neat polypropylene by weight of the total plastic mixture.

Preferably, though not necessarily, the component is furthermore characterized in that the filler is selected from the group consisting of a mineral filler and a reinforcing filler. In particular, the mineral filler can be selected from the group consisting of calcium carbonate and talc. The reinforcing filler can be selected from the group consisting of glass fibers and natural fibers, such as cellulose.

Preferably, though not necessarily, the component is furthermore characterized in that the plastic mixture further comprises additives selected from the group consisting of antioxidants and lubricants, more preferably in an amount of from 0 to 1% by weight of the plastic mixture.

The plastic mixture may further preferably comprise grafting polymers such as maleic anhydride polypropylene.

The component according to the invention can be a structural or a non-structural component of the household appliance.

For the purpose of the present invention, by the term "structural component" it is meant a component that is able to support loads (weight, force, etc...) without breaking, tearing apart, or collapsing. Typical structural components in a household appliance are dynamic components able to bear vibrations and movements. Non-limitative example of a structural component is the tub shell of a washing machine.

As opposite to "structural components", by the term "non structural element" it is meant a component that is not destined to support loads, i.e. static components. Non-limitative examples of a non structural component are machine rear panels for a washing machine, a drier, a washer drier or a dish washer, base for a drier or a dish washer, softener case for washing machines or dish washer, shelf, sump, salt case and tanks for a dish washer and carters and conduit covers for a food preservation household appliance.

When the component is a structural component, it is made preferably of a plastic mixture comprising:
- 10-60% recycled polyolefin;
- 0-50% neat polyolefin;
- 0-60% mineral filler;
- 0-40% reinforcing filler
the percentages being by weight of the total plastic mixture.

The structural component is preferably selected from the group consisting of a washing machine tub, washer drier tub and drier tub.

When the component is a non-structural component, it is made preferably of a plastic mixture comprising:
- 30-60% recycled polyolefin;
- 0-60% mineral filler;
- 0-20% reinforcing filler
the percentages being by weight of the total plastic mixture.

The non-structural component is preferably selected from the group consisting of washing machine rear panel, washing machine softener case, washer drier rear panel, washer drier softener case, drier rear panel, drier base, dish washer base, dish washer shelf, dish washer sump, dish washer salt case, dish washer softener case, dish washer tank, food preservation household appliance carters and conduit cover.

According to the present invention there is also provided a household appliance comprising the above-disclosed component.

According to the present invention there is also provided a method for manufacturing a household appliance characterized in that the above-disclosed component is used.

A non-limiting embodiment of the present invention will now be described, by way of example.

### Example 1

In following table 1, there are illustrated five different plastic mixtures according to the invention.

**Table 1**

| Component | Structural uses Compositions | | | non-Structural uses compositions | |
|---|---|---|---|---|---|
| | #1 | #2 | #3 | #4 | #5 |
| Recycled Polypropylene | 14.25 | 57.00 | 57.00 | 57.00 | 44.00 |
| Neat Polypropylene | 42.75 | - | - | - | - |
| Additives | 1.00 | 1.00 | 1.00 | 1.00 | 1.00 |
| Polymer grafting | - | 2 | 3 | - | - |
| Mineral filler | 42.00 | 30.00 | - | 42.00 | 55.00 |
| Reinforcement fiber | - | 10.00 | 30.00 | - | - |
| Weight in parts hundred of compound (phc) | | | | | |

The mechanical properties of mixtures #1 and #4 of table 1 are illustrated in table 2.

**Table 2**

| Mechanical property | Structural uses Compositions | non-S tructural uses compositions |
|---|---|---|
| | #1 | #4 |
| Density | 1220±12 kg/m³ | 1277±12 kg/m³ |
| Flexural modulus (1.3mm/min) at 23°C | >3500 MPa | >2100 MPa |
| Flexural modulus (1.3mm/min) at 80°C | >1000 | >300 MPa |
| Tensile stress at yield (50 mm/min) at 23°C | >40 MPa | >12 MPa |
| Strain at yield (50mm/min) at 23°C | >4 % | >4 % |
| Resilience Izod A at 23 °C | >5 kJ/m² | >4 kJ/m² |
| Resilience Izod E at 23 °C | >20 kJ/m² | >50 kJ/m² |

## Claims

1. Component for household appliances made of a plastic mixture comprising recycled polyolefin composition deriving from post-consumer plastic materials and at least one filler, wherein the recycled polyolefin composition contains at least one of:
7-1000 ppm of lead,
5-100 ppm of cadmium,
0.01-1000 ppm of mercury,
10-1000 ppm of chromium,
5-400 ppm of bromine.

2. Component according to claim 1 **characterized in that** the recycled polyolefin composition contains at least one of:
7-90 ppm of lead,
5-40 ppm of cadmium,
0.01-10 ppm of mercury,
10-100 ppm of chromium,
5-100 ppm of bromine.

3. Component according to claim 1 **characterized in that** said plastic mixture comprises:
- 10-60% recycled polyolefin
- 0.1-60% filler;
the percentages being by weight of the total plastic mixture.

4. Component according to any of claims 1 to 3 **characterized in that** said recycled polyolefin composition comprises recycled polypropylene.

5. Component according to any of claims 1 to 4 **characterized in that** said recycled polyolefin composition comprises:
- 60-90% polypropylene;
- 0-20% polyethylene;
- 0-10 % styrenic resin selected from the group consisting of polystyrene, high-impact polystyrene, acrylonitrile butadiene styrene and mixtures thereof;
- 0-10 % other polymers selected from the group consisting of polyethylene terephtalate, polyacrylate, polybutylene terephthalate, polyoxymethylene, poly(p-phenylene oxide) and mixtures thereof,
the percentages being by weight of the total recycled polyolefin.

6. Component according to claim 1 **characterized in that** the plastic mixture further comprises 0 to 50% neat polypropylene by weight of the total plastic mixture.

7. Component according to claim 1 **characterized in that** said filler is selected from the group consisting of a mineral filler, a reinforcing filler and mixtures thereof.

8. Component according to claim 7 **characterized in that** said mineral filler is selected from calcium carbonate and talc.

9. Component according to claim 7 **characterized in that** said reinforcing filler is selected from the group consisting of glass fibers and natural fibers.

10. Component according to claim 1, **characterized in that** said plastic mixture further comprises from 0 to 1% additives by weight of the plastic mixture selected from the group consisting of antioxidants and lubricants.

11. Component according to any claim 1 to 10, **characterized in that** said component is selected from the group consisting of structural component and non-structural component of the household appliance.

12. Component according to claim 11 **characterized in that** said structural component is made of a plastic mixture comprising:
- 10-60% recycled polyolefin;
- 0-50% neat polyolefin;
- 0-60% mineral filler;
- 0-40% reinforcing filler
the percentages being by weight of the total plastic mixture.

13. Component according to claim 12, **characterized in that** the structural component is selected from the group consisting of a washing machine tub, washer drier tub and drier tub.

14. Component according to claim 11 **characterized in that** said non-structural component is made of a plastic mixture comprising:
- 30-60% recycled polyolefin;
- 0-60% mineral filler;
- 0-20% reinforcing filler
the percentages being by weight of the total plastic mixture.

15. Component according to claim 14, **characterized in that** the non-structural component is selected from the group consisting of washing machine rear panel, washing machine softener case, washer drier rear panel, washer drier softener case, drier rear panel, drier base, dish washer base, dish washer shelf, dish washer sump, dish washer salt case, dish washer softener case, dish washer tank, food preservation household appliance carters and conduit cover.
